# EUROPÄISCHE PATENTSCHRIFT

(11) **EP 3 297 889 B1**
(45) Veröffentlichungstag und Bekanntmachung des Hinweises auf die Patenterteilung: **06.03.2019**
(21) Anmeldenummer: 16720145.8
(22) Anmeldetag: 04.05.2016
(51) Int. Cl.: B62D 1/19, F16F 7/12

(54) **LENKSÄULE FÜR EIN KRAFTFAHRZEUG UND ENERGIEABSORPTIONSEINRICHTUNG**
STEERING COLUMN FOR A MOTOR VEHICLE, AND ENERGY ABSORPTION DEVICE
COLONNE DE DIRECTION D'UN VÉHICULE AUTOMOBILE ET DISPOSITIF D'ABSORPTION D'ÉNERGIE

(30) Priorität: 18.05.2015 DE 102015209060
(43) Veröffentlichungstag der Anmeldung: 28.03.2018
(73) Patentinhaber: ThyssenKrupp Presta AG, 9492 Eschen (LI); thyssenkrupp AG, 45143 Essen (DE)
(72) Erfinder: SCHÄDLICH, André, 9469 Haag (CH)
(74) Vertreter: thyssenkrupp Intellectual Property GmbH
(86) Internationale Anmeldenummer: PCT/EP2016/059972
(87) Internationale Veröffentlichungsnummer: WO 2016/184684

(56) Entgegenhaltungen:
- EP-A1- 1 630 098
- DE-B3-102008 034 807
- KR-A- 20070 045 774

## Beschreibung

### Stand der Technik

Die Erfindung betrifft eine Lenksäule für ein Kraftfahrzeug, umfassend eine Trageinheit, die mit der Karosserie des Fahrzeugs verbindbar ist, und eine Manteleinheit, in der eine Lenkspindel um ihre Längsachse drehbar gelagert ist und die in der Trageinheit in Längsrichtung parallel zur Längsachse verschiebbar aufgenommen ist, wobei zwischen Trageinheit und Manteleinheit eine Energieabsorptionseinrichtung angebracht ist, welche mindestens ein erstes Biegeelement umfasst, welches einen langgestreckten, parallel zur Längsrichtung angeordneten Eingangsschenkel aufweist, der ein freies Ende aufweist und ein anderes Ende, welches in eine Umbiegung übergeht, an die sich ein Festschenkel anschließt, wobei das freie Ende mit der Trageinheit und der Festschenkel mit der Manteleinheit verbunden ist, oder das freie Ende mit der Manteleinheit und der Festschenkel mit der Trageinheit verbunden ist, wobei ein zweites Biegeelement spiegelbildlich zu einem ersten Biegeelement ausgebildet und spiegelsymmetrisch benachbart zum ersten Biegeelement angeordnet ist.

Über die Lenkspindel wird das vom Fahrer in das Lenkrad eingebrachte Lenkmoment zum Lenkgetriebe übertragen, von dem Spurstangen bewegt werden und dadurch ein Lenkeinschlag der lenkbaren Räder eines Kraftfahrzeugs bewirkt wird. Die drehbare Lagerung der Lenkspindel erfolgt in einer Manteleinheit, die je nach Bauform als Führungskasten oder Mantelrohr ausgebildet sein kann. An der Fahrzeug-Karosserie ist die Manteleinheit über eine Trageinheit angebracht, beispielsweise eine Konsoleneinheit.

Zur Verbesserung der Insassensicherheit bei einem Fahrzeugzusammenstoß, dem sogenannten Crashfall, ist in einer gattungsgemäßen Lenksäule eine sogenannte Crasheinrichtung oder ein Crashsystem vorgesehen ist. Eine Crasheinrichtung wird dadurch realisiert, dass die Manteleinheit relativ zur karosseriefesten Trageinheit in Längsrichtung nach vorn einschiebbar ist, wenn der Körper des Fahrers bei einem Frontalzusammenstoß mit hoher Geschwindigkeit auf das Lenkrad aufprallt, wobei eine große Kraft auf das Lenkrad ausgeübt wird, die einen Grenzwert überschreitet, der nur im Crashfall auftritt. Um dabei für eine kontrollierte Abbremsung des auf das Lenkrad auftreffenden Körpers zu sorgen, ist zwischen der Manteleinheit und der Trageinheit, die im Normalbetrieb üblicherweise durch die Spanneinrichtung einer Positions-Verstelleinrichtung miteinander fixiert sind, im Crashfall jedoch relativ zueinander zusammengeschoben werden, eine Energieabsorptionseinrichtung eingekoppelt. Diese setzt die eingeleitete kinetische Energie in plastische Verformung eines Energieabsorptionselements um, in der gattungsgemäßen Bauweise durch Verbiegen eines langgestreckten Biegeelements, etwa eines Biegedrahts oder Biegestreifens.

Ein Biegedraht oder -streifen, wie er beispielsweise bei einer gattungsgemäßen Lenksäule in der DE 10 2008 034 807 B3 beschrieben ist, hat eine im wesentlichen U-förmige Grundform mit einem ersten Schenkel - als Eingangsschenkel bezeichnet - der über eine Umbiegung von 180° in einen zweiten Schenkel - Festschenkel genannt - übergeht. Der Eingangsschenkel erstreckt sich in Längsrichtung und kann mit seinem freien Ende mit der Manteleinheit verbunden sein. Der Festschenkel kann mit einem Befestigungsabschnitt, der sich ebenfalls im Endbereich des Schenkels befindet, an der Trageinheit festgelegt werden. Alternativ ist es möglich, dass der Eingangsschenkel mit der Trageinheit und der Festschenkel mit der Manteleinheit verbunden ist.

Im Normalbetrieb sind Trag- und Manteleinheit über das Biegeelement fest miteinander verbunden und dadurch in Längsrichtung relativ zueinander positioniert. Im Crashfall wirkt eine große Kraft in Längsrichtung zwischen Mantel- und Trageinheit, wodurch das Biegeelement verformt und kinetische Energie absorbiert wird. Konkret erfolgt die Verformung dadurch, dass der von der Manteleinheit bewegte Eingangsschenkel in Längsrichtung parallel zum feststehenden Festschenkel verschoben wird, so dass die Position der Umbiegung zum freien Ende des Eingangsschenkels mit im Wesentlichen konstant bleibendem Biegeradius durchwandert oder durchwälzt, d.h. der Eingangsschenkel wird innerhalb der durch die U-förmige Grundform gegebenen Ebene in die Biegerichtung der Umbiegung umgebogen und läuft hinter der Umbiegung in den Festschenkel aus. Vorteilhaft ist dabei, dass die während der fortschreitenden Umbiegung umgesetzte bzw. absorbierte Energiemenge durch den umgebogenen Materialquerschnitt des Biegeelements relativ genau definiert werden kann.

Bei der Verbiegung des Eingangsschenkels wirken quer zur Längsachse zwischen den Schenkeln des Biegeelements Querkräfte, die abgestützt werden müssen, damit der Radius der im Crashfall fortschreitenden Umbiegung im Wesentlichen konstant bleibt und es nicht zu einem seitlichen Ausweichen der Schenkel kommt und der Biegeradius der Umbiegung nicht undefiniert aufgeweitet wird. Hierzu ist es aus der vorgenannten DE 10 2008 034 807 B3 bekannt, das Biegeelement zwischen seitlichen, sich in Längsrichtung erstreckenden Begrenzungswänden anzuordnen. Dadurch wird ein seitliches Ausweichen bei der Verformung der Schenkel im Crashfall wirksam verhindert und somit ein gleichmäßig definierter Kraftverlauf bei der Verformung des Biegeelements sichergestellt.

Problematisch ist allerdings, dass zumindest einer der Schenkel mit seiner der Umbiegung abgewandten Außenseite im Crashfall in Längsrichtung an der Begrenzungswand entlanggleitet. Die dabei auftretenden Reibungskräfte können den gleichmäßigen Kraftverlauf bei der Energieabsorption im Crashfall stören. Um dem entgegenzuwirken ist zwar vorgeschlagen worden, zumindest die Außenseite des Biegeelements mit einer reibungsvermindernden Beschichtung zu versehen. Dies erfordert jedoch die Verwendung von speziellem Beschichtungsmaterial und insbesondere einen zusätzlichen Bearbeitungsschritt, wodurch der Fertigungsaufwand sowie die Kosten erhöht werden.
Aus der KR 2007 0045774 A ist eine Lenksäule der eingangs genannten Art bekannt. Die Energieabsorptionseinrichtung weist zwei Biegeelemente auf, die spiegelsymmetrisch ausgebildet und angeordnet sind. Im Crashfall kann die Verformung der Biegeelemente jedoch beeinträchtigt werden. Außerdem ist die Montage der Biegegelemente relativ aufwendig.
Aus der EP 1 630 098 A1 ist eine ähnlich aufgebaute Energieabsorptionseinrichtung bekannt.
Angesichts der vorangehend erläuterten Problematik ist es eine Aufgabe der vorliegenden Erfindung, eine Lenksäule mit einer verbesserten Energieabsorptionseinrichtung sowie eine Energieabsorptionseinrichtung zur Verfügung zu stellen, welche eine vereinfachte Herstellung und eine zuverlässige Funktion im Crashfall ermöglicht.

### Darstellung der Erfindung

Diese Aufgabe wird von einer Lenksäulenanordnung mit den Merkmalen der unabhängigen Ansprüche gelöst. In den Unteransprüchen sind vorteilhafte Weiterbildungen der Erfindung genannt.

Zur Lösung der vorgenannten Problematik wird vorgeschlagen, dass ein zweites Biegeelement spiegelbildlich zu einem ersten Biegeelement ausgebildet und spiegelsymmetrisch benachbart zum ersten Biegeelement angeordnet ist.

Dabei sind jeweils Biegeelemente spiegelsymmetrisch jeweils paarweise angeordnet. Ein Paar wird dabei jeweils durch zwei Biegeelemente gebildet, die beiderseits einer Spiegelebene einander gegenüberliegend angeordnet sind, welche durch eine die Längsachse enthaltende Radialebene gebildet wird, d.h. die Längsachse liegt in der Spiegelebene. Die Umbiegung der Biegeelemente - die wie bei den bekannten Biegeelementen bevorzugt etwa 180° beträgt - liegt dabei in einer Biegeebene, die sich parallel zu Längsachse senkrecht zur Spiegelebene erstreckt. Folglich liegen sich die Biegeelemente jeweils mit den Außenseiten ihrer Eingangs- oder Festschenkel, die der Biegerichtung der Umbiegung abgewandt sind, gegenüber.

Ein besonderer Vorteil der Gestaltung ist, dass die Außenflächen an den Außenseiten der Schenkel, die relativ zu der Trageinheit oder der Manteleinheit beim Crash in Längsrichtung translatorisch verschoben werden, paarweise angeordnet werden können. Diese spiegelbildlich gepaarten Flächen bewegen sich in Längsrichtung gleich, es tritt keine Relativbewegung zwischen ihnen auf, sondern nur eine Abrollbewegung im Bereich des Übergangs in die Umbiegung. Folglich tritt die im Stand der Technik nachteilige Gleitreibung nicht auf.

Ein weiterer Vorteil der paarweise symmetrischen Anordnung ist, dass die Biegeelemente sich zur Aufnahme der bei der Verformung im Crashfall wirkenden Querkräfte zumindest teilweise gegenseitig abstützen können, wodurch ein einfacherer und kompakterer Aufbau realisierbar ist. Bezüglich seitlicher Begrenzungswände, die gegebenenfalls zur Begrenzung des Ausweichens der Schenkel in Querrichtung an der Trageinheit vorgesehen werden können, tritt ebenfalls keine Relativbewegung in Längsrichtung auf, sondern gleichfalls ein Abrollen. Dadurch kann eine hohe Funktionssicherheit sichergestellt werden, wobei auf reibungsvermindernde Beschichtungen oder dergleichen verzichtet werden kann. Der Fertigungsaufwand wird dadurch reduziert.

Die Ausführung der Erfindung sieht vor, dass die bezüglich der Umbiegung abgewandten Außenseiten der Eingangsschenkel parallel gegeneinander anliegen. Die Eingangsschenkel liegen dabei in der Spiegelebene aneinander. Sie stellen durch ihre Länge den Weg zur Verfügung, innerhalb dessen die Abbremsung zur Energieabsorption im Crashfall erfolgt. Wie oben beschrieben, wird im Crashfall die Umbiegung entgegen der Längsrichtung über den Eingangsschenkel hinweg bewegt, bis das eingangsseitige, freie Ende des Eingangsschenkels die Umbiegung erreicht. Dabei wird bei der Verbiegung eine Querkraft ausgeübt, die den Eingangsschenkel quer zur Längsachse in Richtung der Außenseite des Eingangsschenkels, die der Biegerichtung der Umbiegung abgewandt, d.h. entgegengesetzt ist. Dadurch, dass die Außenseiten gegeneinander liegen, stützen sich die Eingangsschenkel paarweise in Querrichtung in der Spiegelebene gegeneinander ab, so dass keine zusätzliche Abstützung durch Begrenzungswände oder dergleichen erfolgen muss. Im Crashfall bewegen sich die beiden gegeneinander anliegenden Eingangsschenkel gleichförmig in Längsrichtung und werden beim Erreichen der Umbiegung nach innen abgebogen, so dass dort die Außenseiten achsensymmetrisch voneinander abgehoben werden. Diese Auftrennung der beiden Außenseiten beinhaltet ausschließlich eine Relativbewegung entgegen der Flächennormalen der Außenseiten und wird nicht durch Gleitreibung in Längsrichtung behindert. Der Eingangsschenkel passiert die Umbiegung und tritt zum Festschenkel in Richtung des Befestigungsabschnitts heraus. Dabei wird die Außenseite des Festschenkels gleichförmig mit der Trageinheit bewegt, mit welcher der Befestigungsabschnitt des Feststempels verbunden ist, d.h. zwischen gegeneinander gerichteten Oberflächen von Festschenkel und Trageinheit tritt ebenfalls keine Gleitreibung in Längsrichtung auf.

Durch die erfindungsgemäße paarweise Anordnung der Biegeelemente wird erreicht, dass sich die Biegeelemente mit ihren Eingangsschenkeln innerhalb der Energieabsorptionseinrichtung gegenseitig stützen und in Querrichtung fixieren, und die Energieabsorptionseinrichtung lediglich über Festschenkel mit der Trageinheit in Kontakt kommt. Dadurch treten keine Gleitbewegungen zwischen den Biegelementen und den im Crashfall in Längsrichtung gegeneinander verschobenen Oberflächen von Trag- und Manteleinheit auf.

Die beschriebene Anordnung mit den gegeneinander anliegenden Eingangsschenkeln hat den Vorteil, dass ein Ausweichen in Querrichtung der im Crashfall in Längsrichtung auf Druck belasteten Eingangsschenkel wirkungsvoll verhindert wird. Es ist jedoch alternativ bei prinzipiell gleicher Funktionsweise möglich, dass die Biegeelemente mit ihren Festschenkeln spiegelsymmetrisch gegeneinander anliegen. In dieser Ausführung können die Eingangsschenkel an Begrenzungswänden, die wie die Befestigung der Eingangsschenkel am Mantelrohr ausgebildet sind, in Querrichtung abgestützt werden.

Es ist grundsätzlich denkbar und möglich, die Eingangsschenkel wie beschrieben mit der Manteleinheit zu verbinden, und entsprechend die Festschenkel mit der Trageinheit zu verbinden. Alternativ kann bei prinzipiell gleicher Funktionsweise die Anbringung auch umgekehrt werden, so dass die Eingangsschenkel mit der Trageinheit verbunden sind, und die Festschenkel mit der Manteleinheit.

In einer Weiterbildung der Erfindung können die Eingangsschenkel über Abreißelemente miteinander verbunden sein. Wie vorangehend beschrieben, werden die zunächst mit ihren Außenseiten in der Spiegelebene gegeneinander anliegenden Eingangsschenkel im Crashfall entgegen der Normalenrichtung der Außenseiten voneinander abgehoben. Die Abreißelemente sind als Sollbruchelemente zwischen den Eingangsschenkeln angeordnet, und halten die Außenseiten der Eingangsschenkel mit einer definierten Belastbarkeit zusammen. Wenn im Crashfall eine Kraft entgegen der Normalenrichtung zwischen den Außenseiten der Eingangsschenkel wirkt, welche die Außenseiten auseinander drängt, reißen die Abreißelemente bei Überschreiten einer definierten Kraft ab. Durch eine definierte Vorgabe der Kraft zum Abreißen der Abreißelemente ist es möglich, die zur Trennung der Eingangsschenkel erforderliche Kraft gezielt zu erhöhen. Dadurch kann die Energieabsorptionscharakteristik in weiten Grenzen abgepasst werden. Die praktische Realisierung der Abreißelemente kann im Prinzip durch jede Art von Verbindung zwischen den Eingangsschenkeln erfolgen, die sich bei Überschreitung einer bestimmten Belastung löst, beispielsweise durch Nieten oder andere Verbindungselemente, welche durch die Eingangsschenkel geführt sind, oder durch Schweißpunkte oder -bahnen zwischen den gegeneinander anliegenden Oberflächen, oder durch Klebeverbindungen. Alternativ können auch die Eingangsschenkel miteinander verbindende Klemmen oder Hüllen aufweisen.

Die Festschenkel können Befestigungselemente aufweisen zur Verbindung der Festschenkel mit einer Trageinheit oder Manteleinheit. Die Befestigungselemente dienen zur Verbindung des Festschenkels mit der Lenksäule. Sie können beispielsweise als Befestigungslaschen ausgebildet sein, die sich von einem Festschenkel abgewinkelt senkrecht zur Spiegelebene erstrecken. Sie können zum Eingangsschenkel bzw. zum benachbarten Biegeelement gerichtet sein, mit Befestigungsöffnungen, die parallel zur Spiegelebene und senkrecht zur Längsachse verlaufen. Derartige Befestigungslaschen können mit Schrauben, Nieten oder anderen Verbindungselementen an der Trageinheit angebracht werden. Derartige Verbindungen sind belastbar, zuverlässig und mit geringem Fertigungsaufwand realisierbar.

Eine Ausführung der Erfindung sieht vor, dass die Befestigungsabschnitte der benachbarten Biegeelemente senkrecht zur Spiegelebene miteinander verbunden sind. Durch die Verbindung wird bewirkt, dass die Festschenkel der Biegeelemente eines erfindungsgemäßen Paars von Biegeelementen quer zum Krafteintrag relativ zueinander fixiert sind. Dadurch können die Festschenkel durch die im Crashfall bei der Verbiegung der Schenkel auftretenden Querkräfte nicht ausweichen, so dass eine kontrollierte Verformung sichergestellt ist. damit wird zumindest teilweise die Funktion von Begrenzungselementen bzw. -wänden bereitgestellt, wobei die Verbindung der Befestigungsabschnitte mit geringerem Aufwand möglich ist. Die Verbindung kann bevorzugt mittels Formschlusselementen erfolgen, alternativ oder zusätzlich kann eine Verschweißung oder Verklebung erfolgen.

Eine vorteilhafte Möglichkeit zur Verbindung der Befestigungsabschnitte miteinander und gegebenenfalls mit der Trag- oder Manteleinheit besteht darin, dass die Befestigungsabschnitte mit einem Brückenelement verbunden sind. Das Brückenelement ist mit einer Trageinheit oder Manteleinheit verbindbar. Das Brückenelement kann mit der Trageinheit oder der Manteleinheit verbindbar sein und für die Verbindung der Festschenkel miteinander dienen. Die Verbindung des Brückenelements mit den Befestigungsabschnitten kann mittels Formschluss erfolgen, beispielsweise durch Nieten, Schrauben oder dergleichen, oder durch Stoffschluss mittels Schweißen oder Kleben. Das Brückenelement kann beispielsweise aus Stahl, Aluminium, anderen Metallen oder Kunststoffmaterialien gebildet sein.

Es ist eine vorteilhafte Weiterbildung, dass der Festschenkel sich zum freien Ende des Eingangsschenkels erstreckt und mit diesem über ein Losbrechelement verbunden ist. Bei dieser Ausführung der Erfindung ist der Festschenkel nicht nur mit der Trageinheit, sondern auch mit einem freien Ende mit dem Eingangsschenkel verbunden. Auf diese Weise bekommt das Biegeelement die Form einer geschlossenen Schleife, wobei die freien Enden von Eingangsschenkel und Festschenkel bevorzugt in dieselbe Richtung weisen, so dass eine Art Tropfenform gebildet wird. Wird im Crashfall das freie Ende des Eingangsschenkels in Längsrichtung belastet, tritt eine Scherkraft zwischen den freien Enden von Eingangs- und Festschenkel auf. Diese Scherkraft wird zunächst von dem Losbrechelement aufgenommen, welches beim Erreichen eines Kraft-Grenzwerts bricht und die gegenseitige Bewegung von Eingangs- und Festschenkel freigibt. Dadurch kann ein Grenzwert definiert vorgegeben werden, bei dem die eigentliche Verformung des Biegeelements startet. Das Losbrechelement kann beispielsweise durch einen Scherbolzen, Niet oder Zapfen dargestellt werden, welcher durch deckungsgleiche Durchgangsöffnungen im Bereich der freien Enden von Eingangs- und Festschenkel hindurchgeführt und befestigt ist. Durch die Abmessungen, insbesondere den Durchmesser, und das Material, beispielsweise Stahl, Aluminium, andere Metalle oder Kunststoffmaterialien, kann die Auslösekraft des Losbrechelements mit geringem Aufwand in weiten Grenzen vorgegeben und die Energieabsorptionscharakteristik der erfindungsgemäßen Energieabsorptionseinrichtung entsprechend eingestellt werden.

Es ist vorteilhaft, dass die Energieabsorptionseinrichtung zwischen Begrenzungselementen angeordnet ist, die sich parallel zur Längsachse benachbart zu den Festschenkeln erstrecken. Die Begrenzungselemente können beispielsweise als sich parallel zur Längsachse erstreckende Begrenzungswände ausgestaltet sein, welche parallel zur Spiegelfläche ausgerichtet sind und an der Trag- oder Manteleinheit angebracht sind. An den Begrenzungswänden können sich die Biegeelemente mit ihren bezüglich der Spiegelebene nach außen weisenden Außenflächen abstützen. So können sich beispielsweise die Festschenkel mit ihren Außenseiten an Begrenzungswänden abstützen, welche an der Trageinheit ausgebildet sind. Dadurch wird im Crashfall ein Ausweichen des Festschenkels in Querrichtung verhindert, so dass die Verformung des Biegeelements besser kontrolliert wird und die Energieabsorptionscharakteristik besonders präzise vorgebbar ist.

Die Biegeelemente können bevorzugt als Stanz- und/oder Biegeteile ausgebildet sein. Die Fertigung aus Stahl oder anderen Materialien kann als Draht- oder Streifen- Biegeteil oder Stanzteil rationell und präzise erfolgen. Bei der Gestaltung dieser Teile kann bevorzugt eine zweidimensionale Form gewählt werden, so dass ein Biegeteil durch einfache 180°-Drehung um eine in der Erstreckungsebene liegende Drehachse in einer erfindungsgemäßen Energieabsorptionsvorrichtung spiegelsymmetrisch eingesetzt werden kann. Somit muss zur Realisierung der Erfindung lediglich eine Sorte von Stanz- oder Biegeteilen produziert werden, was den Fertigungsaufwand und die Lagerhaltung reduziert. Darüber hinaus ist sichergestellt, dass die symmetrisch verwendeten, ansonsten identischen Biegeelemente weitgehend identische Verformungs- und damit Energieabsorptionseigenschaften haben, was der sicheren Funktion zugutekommt.
Es kann weiterhin vorteilhaft sein, dass die Biegeelemente mit einer Beschichtung beschichtet sind. Zwar tritt bei der Erfindung wie erläutert keine Gleitbewegung zwischen den Biegeelementen und Trag- bzw. Manteleinheit auf, so dass die Reduzierung der Reibung nicht so relevant ist wie im Stand der Technik. Allerdings kann im Einzelfall gefordert sein, dass auch nach jahrelanger Inaktivität der Crasheinrichtung kein Anhaften oder dergleichen auftritt, was durch eine Beschichtung besonders gewährleistet werden kann. Die Beschichtung kann dabei eine haftungsreduzierende oder galvanisch trennende Beschichtung sein.
Es ist weiterhin denkbar und möglich, zwei oder mehr erfindungsgemäße Energieabsorptionseinrichtungen an unterschiedlichen Positionen zwischen Trag- und Manteleinheit anzuordnen, beispielsweise auf gegenüberliegenden Seiten der Manteleinheit, um eine verbesserte symmetrische Energieeinleitung zu ermöglichen. Es können ebenfalls Energieabsorptionseinrichtungen mit unterschiedlichen Energieabsorptionscharakteristiken in einer Lenksäule angeordnet werden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer ersten Ausführungsform in einer schematischen perspektivischen Ansicht,
- Figur 2: die Stelleinheit der Lenksäule gemäß Figur 1,
- Figur 3: die Stelleinheit der Lenksäule gemäß Figur 1,
- Figur 4: die Stelleinheit der Lenksäule gemäß Figur 1 in einer weiteren Ausführung,
- Figur 5: die Stelleinheit der Lenksäule gemäß Figur 3 in teilweise auseinandergezogenem Zustand,
- Figur 6: die Energieabsorptionseinrichtung der Lenksäule gemäß Figuren 1 - 3 und 5 in schematischer perspektivischer Ansicht mit auseinandergezogenen Biegeelementen,
- Figur 7: die Energieabsorptionseinrichtung gemäß Figur 6 in einer weiteren perspektivischen Ansicht,
- Figur 8: die Energieabsorptionseinrichtung gemäß Figur 6 in einer Draufsicht in radialer Richtung bezüglich der Längsachse,
- Figur 9: eine erfindungsgemäße Lenksäule in einer zweiten Ausführungsform in einer schematischen perspektivischen Ansicht,
- Figur 10: die Stelleinheit der Lenksäule gemäß Figur 9,
- Figur 11: die Stelleinheit gemäß Figur 9 in teilweise auseinandergezogenem Zustand,
- Figur 12: die Energieabsorptionseinrichtung gemäß Figuren 9 bis 11 in einer Draufsicht in radialer Richtung bezüglich der Längsachse,
- Figur 13: eine perspektivische Ansicht der Energieabsorptionseinrichtung gemäß Figur 12,
- Figur 14: die Energieabsorptionseinrichtung der Lenksäule gemäß Figuren 9 bis 11 schematischer perspektivischer Ansicht mit auseinandergezogenen Biegeelementen,
- Figur 15: eine weitere perspektivische Ansicht der Energieabsorptionseinrichtung gemäß Figur 12,
- Figur 16: eine erfindungsgemäße Lenksäule in einer dritten Ausführungsform in einer schematischen perspektivischen Ansicht,
- Figur 17: die Stelleinheit der Lenksäule gemäß Figur 16.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

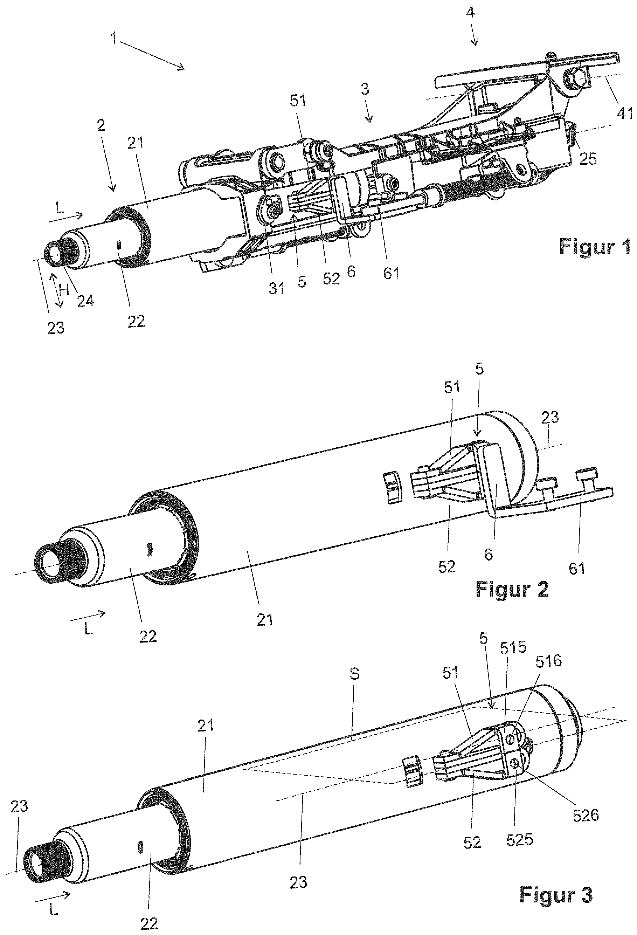

Figur 1 zeigt eine erfindungsgemäße Lenksäule 1 schematisch in perspektivischer Ansicht schräg von hinten (bezogen auf die Fahrtrichtung eines nicht dargestellten Kraftfahrzeugs).

Die Lenksäule 1 weist eine Stelleinheit 2 auf, mit einer als Mantelrohr 21 ausgebildeten Manteleinheit 21, in der eine Lenkspindel 22 um die Längsachse 23 drehbar gelagert ist. (Die Bezeichnungen Mantelrohr 21 und Manteleinheit 21 werden im Folgenden gleichbedeutend benutzt.) An ihrem bezogen auf die Fahrtrichtung hinteren Ende weist die Lenkspindel einen Befestigungsabschnitt 24 zur Anbringung eines nicht dargestellten Lenkrads auf.

Zur Bezeichnung von Richtungsangaben wird im Folgenden definitionsgemäß festgelegt, dass die Lenkspindel 22 und damit das Mantelrohr 21 bzw. die Stelleinheit 2 sich vom lenkradseitigen Ende, wo sich der Befestigungsabschnitt 24 befindet, parallel zur Längsachse 23 in Längsrichtung L nach vorn zum lenkradfernen bzw. lenkgetriebeseitigen Ende 25 erstreckt, was mit dem nach vorn weisenden Pfeil L angegeben ist.

Die Manteleinheit 21 ist in einer Trageinheit 3 - die je nach Bauart der Lenksäule auch als Führungskasten oder Kastenschwinge bezeichnet wird - parallel zur Längsachse 23 in und entgegen der Längsrichtung L verschiebbar aufgenommen, wodurch zum einen eine Längenverstellung der Lenksäule 1 zur Anpassung der Lenkradposition vorgenommen werden kann und zum anderen eine Energieabsorption im Crashfall erfolgen kann. Mittels einer nicht im Detail erläuterten, an sich im Stand der Technik bekannten Spanneinrichtung 31 kann im Normalbetrieb die Stelleinheit 2 relativ zur Trageinheit 3 festgelegt werden.

Mit einer Konsole 4 kann die Lenksäule 1 an einer nicht dargestellten Karosserie eines Kraftfahrzeugs befestigt werden. An der Konsole 4 ist die Trageinheit 3 um eine senkrecht zur Längsachse 23 liegende Achse 41 verschwenkbar gelagert, wodurch eine Höhenverstellung des Lenkrads in beide Höhenrichtungen H erfolgen kann.

Zwischen der Manteleinheit 21 und der Trageinheit 3 ist eine Energieabsorptionseinrichtung 5 angebracht, welche eine Verbindung in Längsrichtung L bildet.

Im Crashfall, wird dadurch, dass der Fahrer mit seinem Körper nach vorn auf das Lenkrad aufprallt, eine große Kraft in Längsrichtung L über die Lenkspindel 22 auf die Manteleinheit 21 ausgeübt. Die einwirkende Kraft wird von der Manteleinheit 21 über die Energieabsorptionseinrichtung 5 in Längsrichtung L auf die in dieser Richtung fest mit der Karosserie verbundene Trageinheit 3 übertragen. Das Funktionsprinzip der Energieabsorptionseinrichtung 5 basiert darauf, dass die eingeleitete kinetische Energie in eine plastische Verformung umgesetzt wird, wodurch eine Energieabsorption und somit eine kontrollierte Abbremsung des Fahrers erfolgt. Dabei kann eine definierte Losbrechkraft eingestellt werden.

Figuren 2, 3 und 4 zeigen in derselben Perspektive wie Figur 1 die Stelleinheit 2, wobei die Trageinheit 3 zur besseren Übersicht weggelassen ist.

Die Energieabsorptionseinrichtung 5 weist zwei Biegeelemente 51 und 52 auf, die erfindungsgemäß spiegelbildlich ausgebildet sind, und zwar bezüglich einer Spiegelebene S, welche als Radialebene zur Längsachse 23 definiert ist, d.h. die Spiegelebene S erstreckt sich parallel zur Längsachse 23, wobei die Längsachse 23 in der Spiegelebene S liegt. Zur Verdeutlichung ist die Lage der Spiegelebene S in Figur 3 gestrichelt eingezeichnet.

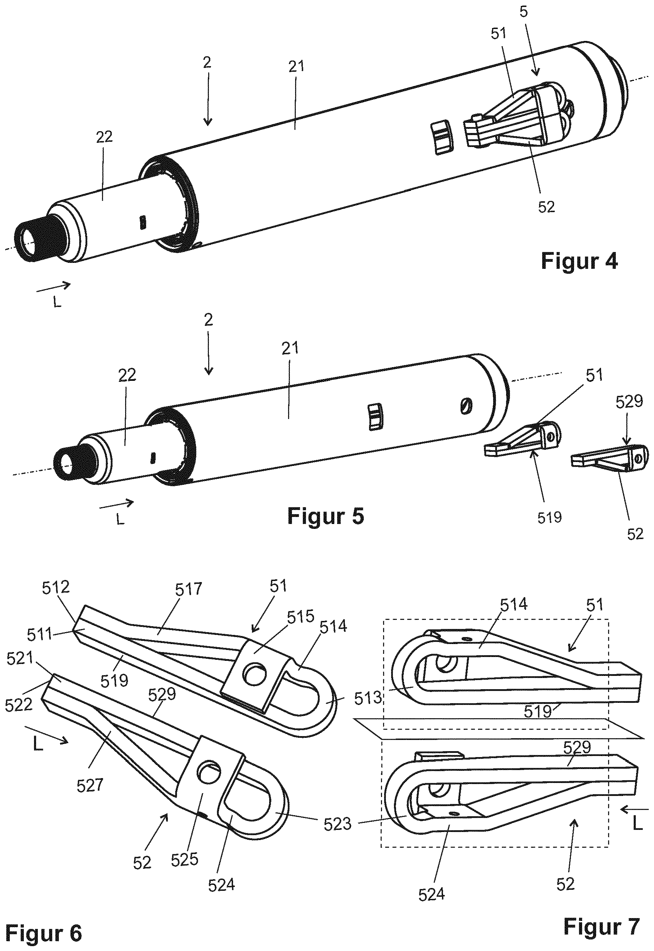

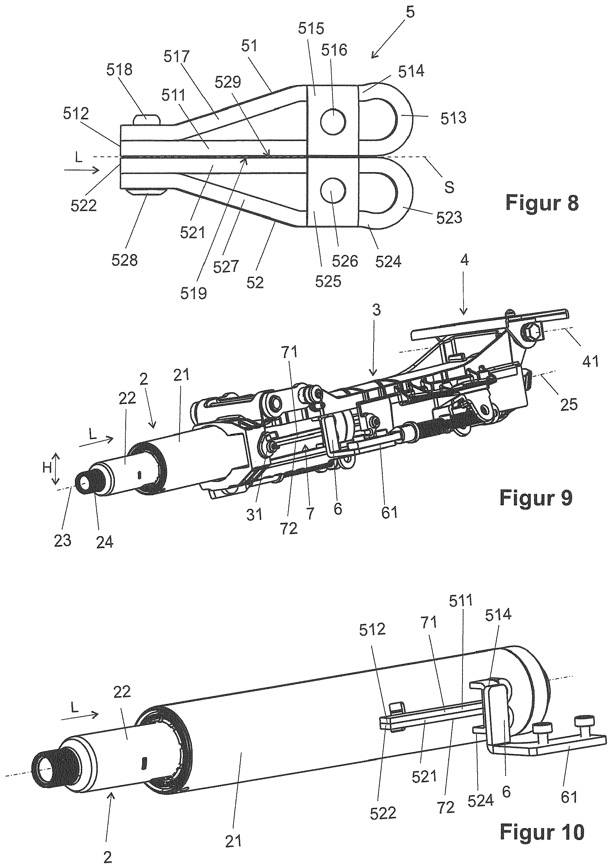

Die Biegeelemente 51 und 52 weisen die identischen Funktionselemente in jeweils spiegelbildlicher Anordnung auf, wie anhand der vergrößerten Darstellungen in Figur 6, 7 und 8 erkennbar ist, wobei Figur 8 eine Ansicht in radialer Richtung bezogen auf die Längsachse auf das vollständig montierte Energieabsorptionselement 5 zeigt und Figur 6 und 7 perspektivische Ansichten, in der die beiden Biegeelemente 51 und 52 senkrecht von der Spiegelebene S auseinandergezogen sind.

Die Biegeelemente 51 und 52 weisen jeweils einen langgestreckten Eingangsschenkel 511, 521 auf, der sich von seinem freien, eingangsseitigen Ende 512, 522 nach vorn in Längsrichtung L erstreckt. Der Eingangsschenkel 511, 521 geht in eine Umbiegung 513, 523, die in der Biegeebene, das ist eine zur Längsachse 23 parallele und zur Spiegelebene S senkrechte Ebene (in Figur 7 die Papierebene B) von der Spiegelebene S weg gerichtet seitlich abgebogen ist. An die Umbiegung 513, 523, die bevorzugt einen Bogen von 180° beschreibt, schließt sich der Festschenkel 514 , 524 an, der sich entgegen der Längsrichtung L erstreckt und an dem ein Befestigungselement 515, 525 angeordnet ist. Das Befestigungselement 515, 525 kann als Lasche ausgebildet sein, die sich von dem Festschenkel 514, 524 in Querrichtung auf die Spiegelebene S zu bis über den Eingangsschenkel 511, 521 erstreckt, wobei das Befestigungselement 515, 525 nicht mit dem Eingangsschenkel 511, 521 verbunden ist und eine Befestigungsöffnung 516, 526 aufweisen kann. Im weiteren Verlauf erstreckt sich der Festschenkel 514, 524 mit einem Verbindungsbereich 517, 527 bis zum freien Ende 512, 522 des Eingangsschenkels 511, 521. Dort kann der Festschenkel 514, 524 durch ein Losbrechelement 518, 528 mit dem Eingangsschenkel 511, 521 verbunden sein, beispielsweise wie in Figur 7 dargestellt mit einem Niet 518, 528.

Bei der dargestellten Energieabsorptionseinrichtung 5 liegen die beiden Biegeelemente 51 und 52 gegen die Spiegelebene S und damit mit den gegeneinander gerichteten Außenseiten 519 und 529 gegeneinander an. Die gegenseitige Lagefixierung der Biegeelemente 51 und 52 kann erfolgen, indem die besagten Außenseiten 519 und 529 miteinander verschweißt oder verklebt oder mittels Formschlusselementen miteinander verbunden sind, oder alternativ durch eine Verbindung der Befestigungselemente 515 und 525 miteinander, beispielsweise wie bei der in Figur 2 dargestellten Ausführung mittels eines Brückenelements 6, welches beispielsweise in den Befestigungsöffnungen 516 und 526 formschlüssig festgelegt sein kann, etwa mit Zapfen, Nieten, Bolzen oder dergleichen. Bei einer weiteren Alternative, die in Figur 4 gezeigt ist, können die Befestigungselemente 515 und 525 selbst fest miteinander verbunden sein, beispielsweise verschweißt.

Die Eingangsschenkel 511, 521 sind an ihrem freien Ende 512, 522 fest mit der Manteleinheit 21 verbunden, beispielsweise durch eine Verschweißung oder eine Formschlußverbindung.

Die Festschenkel 514, 524 sind über das Brückenelement 6, an dem weitere Befestigungselemente 61 ausgebildet sein können, mit der relativ zur Manteleinheit 21 feststehenden Trageinheit 3 verbunden, d.h. die Festschenkel 514, 524 stützen sich gegen die im Crashfall in Längsrichtung eingeleitete Kraft nach vorn an der Trageinheit 3 ab.

In den Figuren 9, 10 und 11 ist eine Lenksäule in einer zweiten Ausführungsform dargestellt, wobei die Ansichten denen aus den Figuren 1, 2 und 5 entsprechen. Der wesentliche Unterschied zur ersten Ausführungsform besteht in der Gestaltung der Energieabsorptionseinrichtung 7. Dabei werden sowohl für gleichwirkende Funktionselemente der Lenksäule 1, als auch der Energieabsorptionseinrichtung 7 die gleichen Bezugszeichen wie bei der ersten Ausführungsform verwendet.

Figuren 9, 10 und 11 unterscheiden sich von den Figuren 1, 2, und 5 lediglich in der Energieabsorptionseinrichtung 7, so dass die oben gegebene Beschreibung identisch auf diese Lenksäule 1 und die Stelleinheit 2 gelesen werden kann.

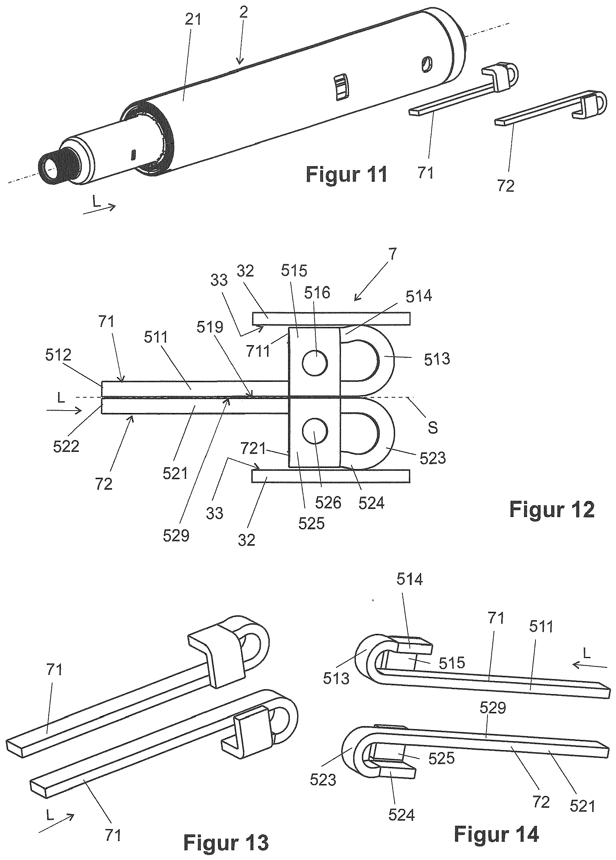

Die Energieabsorptionseinrichtung 7 weist zwei zur Spiegelebene S spiegelbildlich aufgebaute, spiegelsymmetrisch angeordnete Biegeelemente 71 und 72 auf, wie in Figur 12 deutlich erkennbar ist. Diese weisen prinzipiell dieselben Funktionsbereiche wie die Biegeelemente 51 und 52 gemäß Figur 8 auf, was durch die Verwendung derselben Bezugszeichen wie in Figur 8 verdeutlicht wird. Im Unterschied zur ersten Variante ist jedoch kein Verbindungsbereich (in Figur 8 Bezugszeichen 517, 527) zwischen dem Festschenkel 514, 524 und dem freien Ende 512, 522 des Eingangsschenkels 511, 521 vorhanden. Folglich befindet sich ein freies Ende 711, 721 des Festschenkels 514, 524 von der Umbiegung 513, 523 aus gesehen hinter dem Befestigungselement 515, 525.

Das Funktionsprinzip der Erfindung, dass sich die Eingangsschenkel 511, 521 bei einer im Crashfall in Längsrichtung L in das freie Ende 512, 522 eingeleitete Kraft gegenseitig in der Spiegelebene S abstützen, ist ebenfalls realisiert. Bei einer Verformung bewegt sich die Umbiegung 513, 523 mit der Verschiebung der Eingangsschenkel 511, 521 bezüglich der feststehenden Trageinheit 3 in Längsrichtung L nach vorn, d.h. jeder Abschnitt des Eingangsschenkels 511, 521 wird beim Passieren der Umbiegung 513, 523 nach und nach umgebogen, wobei Verformungsarbeit geleistet und kinetische Energie umgesetzt bzw. absorbiert wird. Durch wechselnde Querschnitte können dabei unterschiedliche Kennlinien dargestellt werden. Die Verformung endet, wenn das freie Ende 511, 521 die gleiche Höhe wie das Befestigungselement 515, 525 und/oder die Umbiegung 513,523 erreicht. Durch die Länge des Eingangsschenkels 511, 521 kann auf diese Weise die Länge des Verzögerungswegs im Crashfall und damit die Energieabsorptionscharakteristik vorgegeben werden.

Figuren 13 und 14 zeigen perspektivische Ansichten der Biegeelemente 71 und 72, die bezüglich der Spiegelebene S in Querrichtung auseinandergezogen dargestellt sind.

Die Befestigungselemente 515 und 525 können ausgebildet werden, wie dies vorangehend für die erste Ausführungsform beschrieben worden ist.

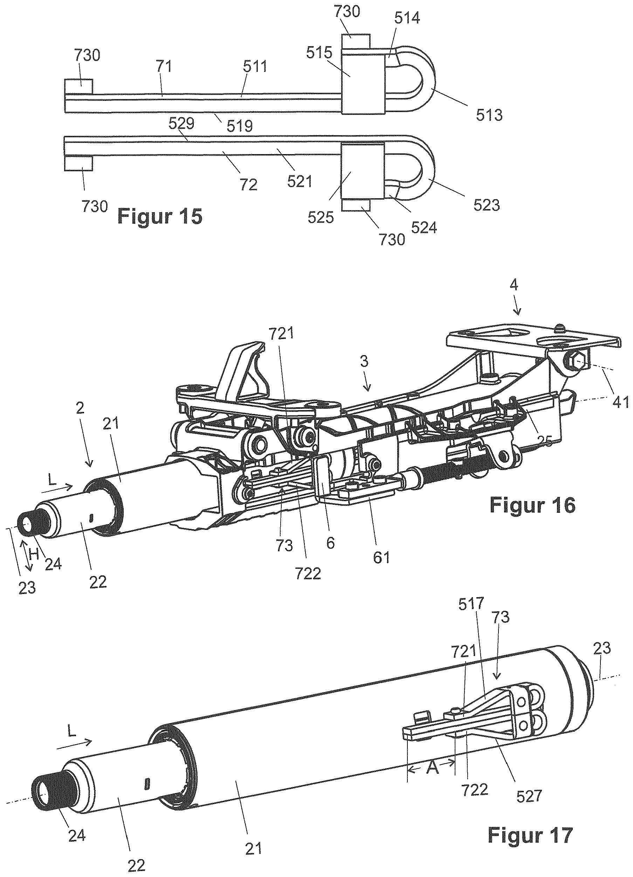

Eine Weiterbildung ist in Figur 15 gezeigt, bei der im Bereich des freien Endes 512, 522 des Eingangsschenkels 511, 521 und am Festschenkel 514, 524 im Bereich des freien Endes 711, 721 bzw. des Befestigungselements 515, 525 Verbindungselemente 730 an den Biegeelementen 71, 72 angebracht sind. An diesen Verbindungselementen 730 kann der Eingangsschenkel 511, 512 an dem Mantelrohr 21 befestigt werden, beispielsweise durch Verschweißen.

In Figuren 16 und 17 ist eine dritte Variante einer erfindungsgemäßen Energieabsorptionseinrichtung 73 dargestellt. Diese Energieabsorptionseinrichtung 73 ist hinsichtlich ihrer Funktion ähnlich aufgebaut wie vorangehend erläutert, wobei Aspekte der ersten Variante, nämlich der Energieabsorptionseinrichtung 5, und der zweiten Variante, nämlich der Energieabsorptionseinrichtung 7, realisiert sind. Wie die erste Variante weisen die Biegeelemente 721, 722 der Energieabsorptionseinrichtung 73 einen Verbindungsbereich 517, 527 auf, der den Festschenkel 514, 524 mit dem Eingangsschenkel 511, 521 verbindet. Allerdings befindet sich die Verbindung nicht im Endbereich, sondern mit Abstand A zum freien Ende 512, 522. Auf diese Weise wird eine Ausführung wie die in Figuren 6 bis 8 gezeigte realisiert, an die sich innerhalb des Abstands A eine Konfiguration wie bei der Ausführung gemäß Figuren 12 bis 14 anschließt. Auf diese Weise können die spezifischen Vorteile der beiden Ausführungsformen miteinander kombiniert werden.

Es ist weiterhin denkbar und möglich, eine Energieabsorptionseinrichtung 5, 7 oder 73 zwischen Begrenzungselementen 32 anzuordnen, wie sie beispielhaft in Figur 12 dargestellt sind. Die Begrenzungselemente 32 sind parallel zur Längsachse 23 an der Trageinheit 3 angeordnet und weisen gegen die Spiegelebene S gerichtete, dazu parallele Begrenzungsflächen 33 auf. Im Crashfall kann sich der Festschenkel 514, 524 bzw. der dann durch die Umbiegung 513, 523 hindurchlaufende Eingangsschenkel 511, 521 gegen die Begrenzungsfläche 33 quer zur Längsrichtung L, d.h. von der Spiegelebene S weg gerichtet, abstützen. Dadurch wird ein Ausweichen und eine Aufweitung der Umbiegung 513, 523 vermieden, wodurch die Energieabsorptionscharakteristik besser kontrollierbar ist.

Soweit einsetzbar können alle einzelnen Merkmale der Erfindung miteinander kombiniert werden, ohne den Bereich der Erfindung zu verlassen.

### Bezugszeichenliste

- 1: Lenksäule
- 2: Stelleinheit
- 21: Manteleinheit (Mantelrohr)
- 22: Lenkspindel
- 23: Längsachse
- 24: Befestigungsabschnitt
- 25: Ende
- 3: Trageinheit (Führungskasten)
- 31: Spanneinrichtung
- 32: Begrenzungselement
- 33: Begrenzungsfläche
- 4: Konsole
- 41: Achse
- 5: Energieabsorptionseinrichtung
- 51, 52: Biegeelement
- 511, 521: Eingangsschenkel
- 512, 522: freies Ende
- 513, 523: Umbiegung
- 514, 524: Festschenkel
- 515, 525: Befestigungselement
- 516, 526: Befestigungsöffnung
- 517, 527: Verbindungsbereich
- 518, 528: Losbrechelement
- 519, 529: Außenseite
- 6: Brückenelement
- 61: Befestigungselement
- 7, 73: Energieabsorptionseinrichtung
- 71, 72: Biegeelement
- 711, 721: freies Ende
- 721, 722: Biegeelement
- 730: Verbindungselement
- L: Längsrichtung
- H: Höhenrichtung
- S: Spiegelebene
- A: Abstand

## Patentansprüche

1. Lenksäule (1) für ein Kraftfahrzeug, umfassend
eine Trageinheit (3), die mit der Karosserie des Fahrzeugs verbindbar ist, und eine Manteleinheit (21), in der eine Lenkspindel (22) um ihre Längsachse (23) drehbar gelagert ist und die in der Trageinheit (3) in Längsrichtung (L) parallel zur Längsachse (23) verschiebbar aufgenommen ist, wobei zwischen Trageinheit (3) und Manteleinheit (21) eine Energieabsorptionseinrichtung (5, 7, 73) angebracht ist, welche mindestens ein erstes Biegeelement (51, 71, 721) umfasst, welches einen langgestreckten, parallel zur Längsrichtung (L) angeordneten Eingangsschenkel (511) aufweist, der ein freies Ende (512) aufweist und ein anderes Ende, welches in eine Umbiegung (513) übergeht, an die sich ein Festschenkel (514) anschließt, wobei das freie Ende (512) mit der Trageinheit (3) und der Festschenkel (514) mit der Manteleinheit (21) verbunden ist, oder das freie Ende (512) mit der Manteleinheit (21) und der Festschenkel (514) mit der Trageinheit (3) verbunden ist,
wobei ein zweites Biegeelement (52, 72, 722) spiegelbildlich zu einem ersten Biegeelement (51, 71, 721) ausgebildet und spiegelsymmetrisch benachbart zum ersten Biegeelement (51, 71, 721) angeordnet ist, **dadurch gekennzeichnet, dass** die bezüglich der Umbiegung (513, 523) abgewandten Außenseiten (519, 529) der Eingangsschenkel (511, 521) parallel gegeneinander anliegen.

2. Lenksäule nach Anspruch 1, **dadurch gekennzeichnet, dass** die Eingangsschenkel (511, 521) über Abreißelemente miteinander verbunden sind.

3. Lenksäule nach einem der vorangehenden Ansprüche, **dadurch gekennzeichnet, dass** die Festschenkel (514, 524) Befestigungselemente (515, 525) aufweisen zur Verbindung der Festschenkel (514, 524) mit einer Trageinheit (3) oder Manteleinheit (21).

4. Lenksäule nach Anspruch 3, **dadurch gekennzeichnet, dass** die Befestigungselemente (515, 525) der benachbarten Biegeelemente (51, 52, 71, 72, 721, 722) senkrecht zur Spiegelebene (S) miteinander verbunden sind.

5. Lenksäule nach Anspruch 3 oder 4, **dadurch gekennzeichnet, dass** die Befestigungselemente (515, 525) mit einem Brückenelement (6) verbunden sind.

6. Lenksäule nach einem der vorangehenden Ansprüche, **dadurch gekennzeichnet, dass** der Festschenkel (514, 524) sich zum freien Ende (512, 522) des Eingangsschenkels (511, 521) erstreckt und mit diesem über ein Losbrechelement (518, 528) verbunden ist.

7. Lenksäule nach einem der vorangehenden Ansprüche, **dadurch gekennzeichnet, dass** die Energieabsorptionseinrichtung (5, 7, 73) zwischen Begrenzungselementen (32) angeordnet ist, die sich parallel zur Längsachse (L) benachbart zu den Festschenkeln (514, 524) erstrecken.

8. Lenksäule nach einem der vorangehenden Ansprüche, **dadurch gekennzeichnet, dass** die Biegeelemente (51, 52, 71, 72, 721, 722) als Biegedraht oder Biegestreifen ausgeführt sind.

9. Lenksäule nach einem der vorangehenden Ansprüche, **dadurch gekennzeichnet, dass** die Biegeelemente (51, 52, 71, 72, 721, 722) als Stanz- und / oder Biegeteile ausgebildet sind.

10. Lenksäule nach einem der vorangehenden Ansprüche, **dadurch gekennzeichnet, dass** die Biegeelemente (51, 52, 71, 72, 721, 722) mit einer Beschichtung beschichtet sind.

## Claims

1. Steering column (1) for a motor vehicle, comprising a supporting unit (3) which is connectable to the body of the vehicle, and a sleeve unit (21) in which a steering spindle (22) is mounted so as to be rotatable about its longitudinal axis (23) and which is accommodated in the supporting unit (3) so as to be displaceable in the longitudinal direction (L) parallel to the longitudinal axis (23), wherein an energy absorption device (5, 7, 73) is fitted between supporting unit (3) and sleeve unit (21), said energy absorption device comprising at least one first bending element (51, 71, 721) which comprises an elongate input limb (511) which is arranged parallel to the longitudinal direction (L) and comprises a free end (512) and another end which merges into a bend (513) to which a fixed limb (514) is connected, wherein the free end (512) is connected to the supporting unit (3) and the fixed limb (514) is connected to the sleeve unit (21), or the free end (512) is connected to the sleeve unit (21) and the fixed limb (514) is connected to the supporting unit (3), wherein a second bending element (52, 72, 722) is formed in a mirror-inverted manner with respect to a first bending element (51, 71, 721) and is arranged mirror-symmetrically adjacent to the first bending element (51, 71, 721), **characterized in that** the outer sides (519, 529) of the input limbs (511, 521), which outer sides face away from the bend (513, 523), lie parallel against each other.

2. Steering column according to Claim 1, **characterized in that** the input limbs (511, 521) are connected to each other via tearing-off elements.

3. Steering column according to either of the preceding claims, **characterized in that** the fixed limbs (514, 524) comprise fastening elements (515, 525) for connecting the fixed limbs (514, 524) to a supporting unit (3) or sleeve unit (21).

4. Steering column according to Claim 3, **characterized in that** the fastening elements (515, 525) of the adjacent bending elements (51, 52, 71, 72, 721, 722) are connected to each other perpendicularly to the mirror plane (S).

5. Steering column according to Claim 3 or 4, **characterized in that** the fastening elements (515, 525) are connected to a bridge element (6).

6. Steering column according to one of the preceding claims, **characterized in that** the fixed limb (514, 524) extends to the free end (512, 522) of the input limb (511, 521) and is connected to the latter via a breakaway element (518, 528).

7. Steering column according to one of the preceding claims, **characterized in that** the energy absorption device (5, 7, 73) is arranged between boundary elements (32) which extend parallel to the longitudinal axis (L) adjacent to the fixed limbs (514, 524).

8. Steering column according to one of the preceding claims, **characterized in that** the bending elements (51, 52, 71, 72, 721, 722) are realized in the form of a bending wire or bending strip.

9. Steering column according to one of the preceding claims, **characterized in that** the bending elements (51, 52, 71, 72, 721, 722) are designed as punched and/or bent parts.

10. Steering column according to one of the preceding claims, **characterized in that** the bending elements (51, 52, 71, 72, 721, 722) are coated with a coating.

## Revendications

1. Colonne de direction (1) d'un véhicule automobile, la colonne de direction comportant
une unité de support (3) qui peut être reliée à la carrosserie du véhicule, et une unité enveloppe (21) dans laquelle un arbre de direction (22) est monté de manière rotative autour de son axe longitudinal (23) et laquelle est reçue dans l'unité de support (3) de manière déplaçable parallèlement à l'axe longitudinal (23) dans la direction longitudinale (L), un dispositif d'absorption d'énergie (5, 7, 73) étant installé entre l'unité de support (3) et l'unité enveloppe (21), lequel dispositif d'absorption d'énergie comporte au moins un premier élément flexible (51, 71, 721), lequel comprend une branche d'entrée (511) allongée disposée parallèlement à l'axe longitudinal (L), laquelle branche d'entrée comprend une extrémité libre (512) et une autre extrémité qui se prolonge en une courbure (513) à laquelle se raccorde une branche fixe (514), l'extrémité libre (512) étant reliée à l'unité de support (3) et la branche fixe (514) étant reliée à l'unité enveloppe (21), ou l'extrémité libre (512) étant reliée à l'unité enveloppe (21) et la branche fixe (514) étant reliée à l'unité de support (3),
un deuxième élément flexible (52, 72, 722) étant réalisé suivant une symétrie spéculaire par rapport à un premier élément flexible (51, 71, 721) et étant disposé de manière adjacente au premier élément flexible (51, 71, 721) suivant une symétrie miroir par rapport à celui-ci, **caractérisée en ce que** les côtés extérieurs (519, 529), opposés à la courbure (513, 523), des branches d'entrée (511, 521) s'appuient parallèlement l'un contre l'autre.

2. Colonne de direction selon la revendication 1, **caractérisée en ce que** les branches d'entrée (511, 521) sont reliées l'une à l'autre par le biais d'éléments de rupture.

3. Colonne de direction selon l'une quelconque des revendications précédentes, **caractérisée en ce que** les branches fixes (514, 524) comprennent des éléments de fixation (515, 525) servant à relier les branches fixes (514, 524) à une unité de support (3) ou à une unité enveloppe (21).

4. Colonne de direction selon la revendication 3, **caractérisée en ce que** les éléments de fixation (515, 525) des éléments flexibles adjacents (51, 52, 71, 72, 721, 722) sont reliés l'un à l'autre perpendiculairement au plan de symétrie (S).

5. Colonne de direction selon la revendication 3 ou 4, **caractérisée en ce que** les éléments de fixation (515, 525) sont reliés à un élément formant pont (6).

6. Colonne de direction selon l'une quelconque des revendications précédentes, **caractérisée en ce que** la branche fixe (514, 524) s'étend jusqu'à l'extrémité libre (512, 522) de la branche d'entrée (511, 521) et est reliée à celle-ci par le biais d'un élément de détachement par rupture (518, 528).

7. Colonne de direction selon l'une quelconque des revendications précédentes, **caractérisée en ce que** le dispositif d'absorption d'énergie (5, 7, 73) est disposé entre des éléments de limitation (32) qui s'étendent parallèlement à l'axe longitudinal (L) de manière adjacente aux branches fixes (514, 524).

8. Colonne de direction selon l'une quelconque des revendications précédentes, **caractérisée en ce que** les éléments flexibles (51, 52, 71, 72, 721, 722) sont réalisés sous forme de fil flexible ou de bande flexible.

9. Colonne de direction selon l'une quelconque des revendications précédentes, **caractérisée en ce que** les éléments flexibles (51, 52, 71, 72, 721, 722) sont réalisés sous forme de pièces estampées et/ou pliées.

10. Colonne de direction selon l'une quelconque des revendications précédentes, **caractérisée en ce que** les éléments flexibles (51, 52, 71, 72, 721, 722) sont revêtus d'un revêtement.
